# EUROPEAN PATENT APPLICATION

(11) **EP 1 120 229 A2**
(43) Date of publication of application: **01.08.2001**
(21) Application number: 01300628.3
(22) Date of filing: 24.01.2001
(51) Int. Cl.: B29C 67/00

(54) **Sealing device**

(30) Priority: 24.01.2000 GB 0001544
(71) Applicant: Unwin, Keith, Hastings, East Sussex TN34 2HA (GB)
(72) Inventor: Unwin, Keith, Hastings, East Sussex TN34 2HA (GB)
(74) Representative: Brookes Batchellor

(57) **Abstract**

A method of sealing an edge of an extruded plastics board (26) is described, the board consisting of opposed, spaced-apart, parallel sheets (11,12). The edge is first heated to soften the end portions of the sheets terminating at the edge, and the board and a forming device are then moved relative to one another in a direction parallel to the edge such that the forming device (30) progressively urges the heated end portions of the sheets inwardly toward one another to form a seal along the said edge. The forming device includes a grooved wheel or pulley (30), and may also include a pair of opposed freely rotatable rollers (28,29) for initially deflecting the heated end portions inwardly toward one another.

## Description

This invention relates to a method of forming a seal along an edge of an extruded plastics board. Such a board may consist of two parallel sheets spaced apart from one another and including at least one hollow duct extending from one end of the board to the other.

For certain applications it would be an advantage if dirt and dust particles were prevented from entering the hollow duct or ducts by sealing the edge of the board at both ends.

A known device for sealing the edge of such a board consists of a static forming device into which the edge of the board is inserted after the edge has been heated. The shaped walls of the forming device progressively urge the two sheets inwardly toward one another at the edge of the sheet until a seal is formed. Such a device is not however capable of handling large boards which may be two or three metres wide.

According to the present invention there is provided a method of sealing an edge of an extruded plastics board, the board consisting of spaced apart parallel sheets, and the method comprising heating the said edge to soften the end portions of the sheets terminating at the edge, and relatively moving the board and a forming device in a direction parallel to the said edge such that the forming device is advanced along the said edge to progressively urge the heated end portions of the sheets inwardly toward one another to form a seal along the said edge.

The forming device is preferably rotatable and is either advanced along the said edge by fixing the board and rolling the forming device along the edge, or by holding the forming device in a fixed position and advancing the edge of the board through the forming device, the device being rotated at a speed corresponding to the speed at which the board is advanced so that there is no slippage between the board and the walls of the forming device.

The forming device preferably comprises a grooved wheel or pulley but may also include a pair of opposed freely rotatable pressure-applying members positioned ahead of the wheel or pulley for initially deflecting the opposed sides of the heated edge of the board inwardly toward one another before forming the seal along the said edge.

One example of a method embodying the invention is illustrated in the accompanying drawings wherein:
Figure 1 is a diagrammatic side view of an extruded plastics board;
Figure 2 is a diagrammatic plan view of the board with the top sheet removed;
Figure 3 is a diagrammatic end view of the board;
Figures 4-6 illustrate diagrammatically the three stages in a process for sealing one end of the board shown in figures 1-3;
Figure 7 illustrates diagrammatically the final stage of the sealing process viewed from the side;
Fig. 8 is a diagrammatic side view of an alternative embodiment of the invention in which the board is horizontal;
Figs. 9-11 illustrate diagrammatically the three stages of the sealing process in the embodiment illustrated in Fig. 8.

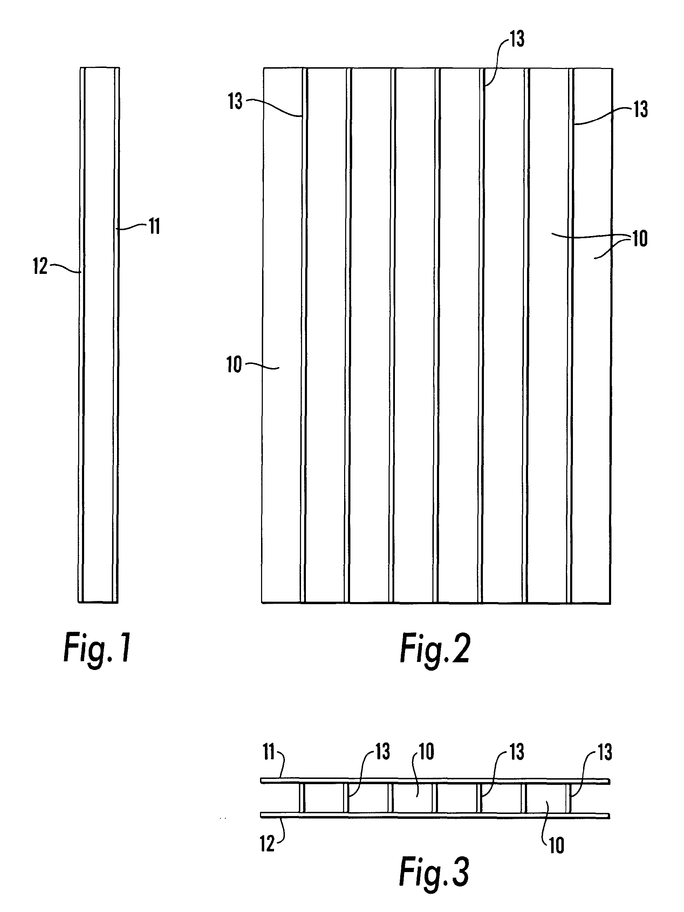

Referring first to Figs. 1-3, an extruded polypropylene board consists of spaced apart upper and lower sheets 11 and 12 (the upper sheet 11 being omitted from Fig 2 for clarity), and the space between the sheets is partitioned by parallel walls 13 extending from one end of the board to the other to form a sequence of hollow ducts 10. In its extruded state, the board is formed with the ducts 10 open at each end.

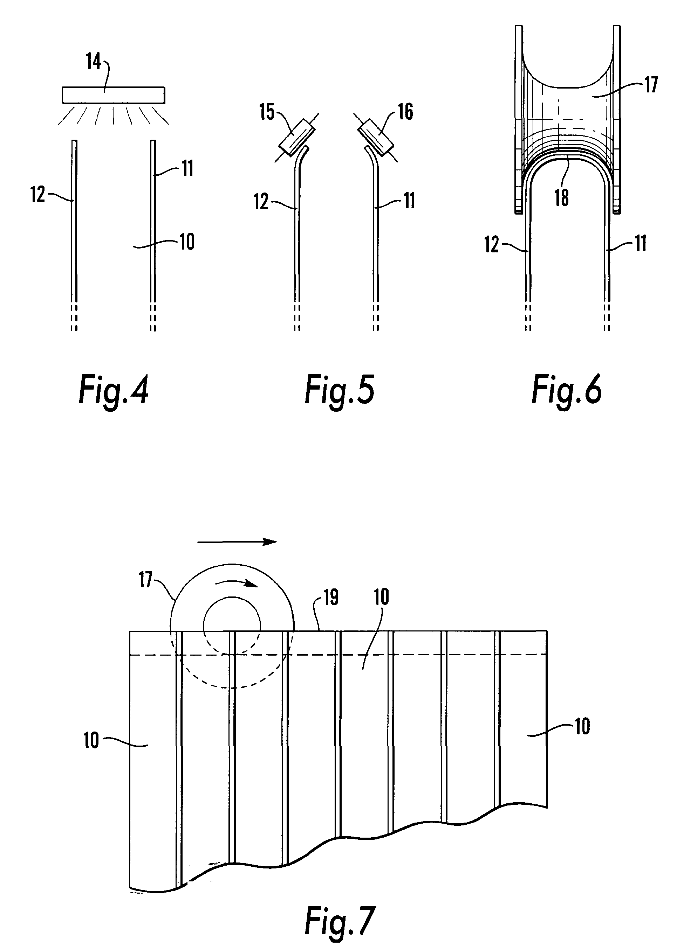

Referring next to Figs. 4-7, a method of sealing the ducts 10 at each end of the board is illustrated. The board is first clamped in a vertical position and an infra-red heater 14 is advanced along the top edge of the board. The heater is advanced at a rate of about 50mm per second and the top end portions of the polypropylene sheets 11 and 12 are therefore heated for about four seconds so that the polypropylene becomes soft and pliable.

Following the infra-red heater 14, a pair of freely rotatable rollers 15 and 16 (Fig 5) engage the top ends of the sheets 11 and 12, the rollers being oppositely inclined to the vertical and being positioned on opposite sides of the board to deflect the ends of the sheets inwardly toward one another. This counteracts the tendency of the polypropylene sheets to splay outwards when heated.

Finally a grooved wheel or pulley 17 (Fig 6) is advanced along the edge of the board behind the rollers 15 and 16, the width of the groove being equal to the thickness of the board such that the wheel further deforms the end portions of the sheets 11 and 12 inwardly until the sheets meet one another and form a seal 18. As shown in Fig 7, the wheel is advanced along a line so that the base of the groove in the wheel is at a level below the top edge 19 of the board. This ensures that the ends of the sheets 11 and 12 are progressively forced downwardly and inwardly toward one another to conform with the contour of the groove as the wheel is advanced along the edge of the board.

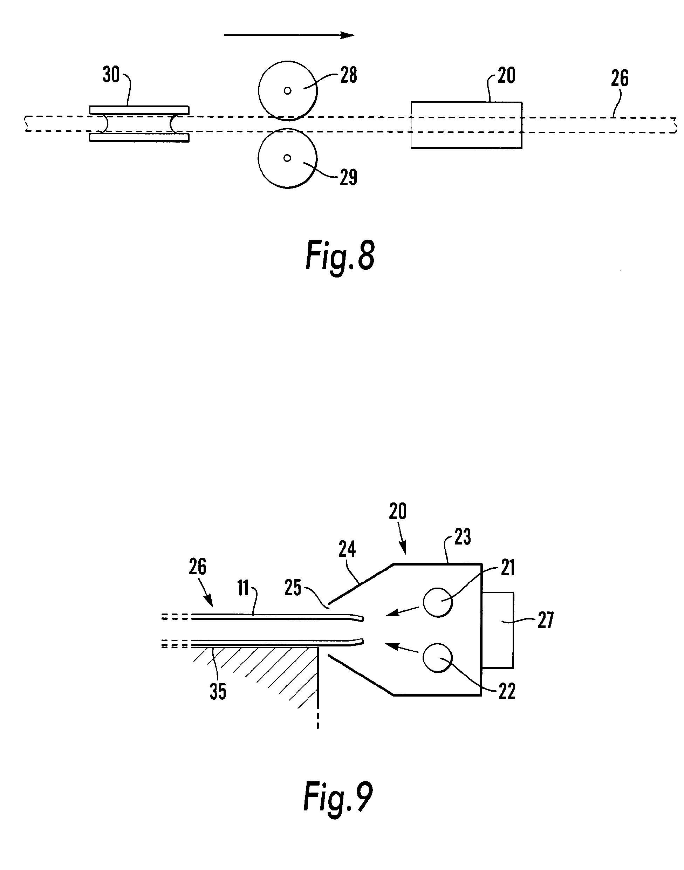

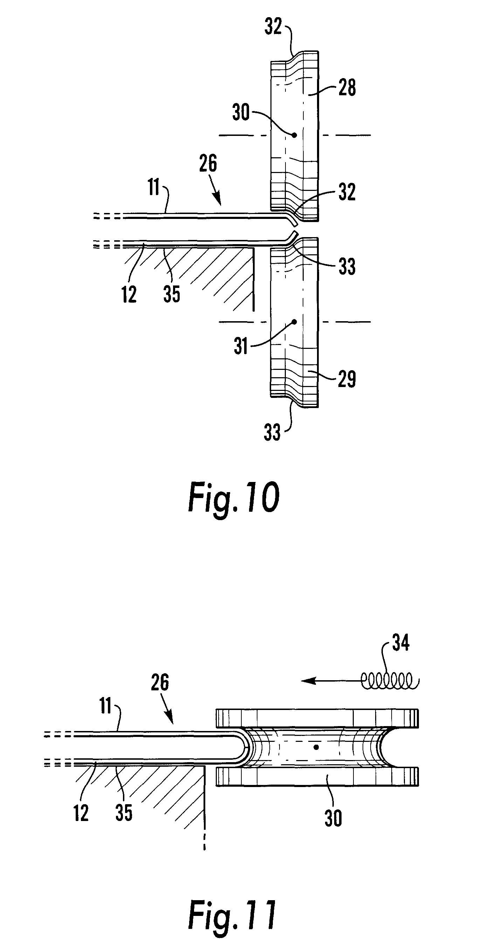

An alternative embodiment of the invention is illustrated in Figs. 8-11. In this embodiment the board 26 is identical to that shown in Figs. 1-3 and it is releasably clamped against a horizontal support surface 35 with one edge of the board overhanging the support surface. A heater, a pair of deflecting rollers, and a grooved wheel or pulley are then advanced along the protruding edge of the board to seal the edge as in the first embodiment.

As shown in Figs. 8-11, the heater is an infra-red heater 20 which includes two infra-red heating elements 21, 22 enclosed within an aluminium housing 23, the housing including a necked portion 24 with an open mouth 25 through which the edge of the board 26 is inserted into the housing. The infra-red radiation from the elements 21, 22 is therefore focused on the end portions of the sheets 11, 12 disposed within the housing 23. As in the first embodiment, this softens the end portions to bring them into a pliable state, and it has been found that improved results are obtained if hot air is exhausted from the housing 23 using an extractor fan 27 at the rear of the housing.

The infra-red heater 20 is advanced along the edge of the board 26 in the direction shown by the arrow in Fig. 8 using a linear guidance system (not shown) consisting of a fixed track extending parallel to the edge of the board and a slide mechanism movable along the track. The housing 23 is secured to the slide mechanism so that the heater 20 is progressively advanced along the edge of the board.

Following behind the heater 20, and also attached to a slide mechanism movable along the track of the linear guidance system, are a pair of opposed, freely rotatable, vertical rollers 28, 29, followed by a horizontal grooved wheel or pulley 30.

The vertical rollers 28, 29 are arranged one above the other and are free to rotate about respective horizontal axes 30, 31. The opposed faces 32, 33 of the respective rollers 28, 29 are profiled so that the board 26 can be inserted between the rollers from one side only, the gap between the rollers being equal to the thickness of the board so that the profiled faces 32, 33 curve the softened end portions of the sheets 11, 12 inwardly toward one another as the rollers advance along the edge of the board. This overcomes the tendency of the softened end portions to splay outwards after passing through the infra-red heater.

The horizontal grooved wheel or pulley 30 then completes the sealing process by rolling along the edge of the board 26 so that the inwardly turned end portions of the sheets 11, 12 conform to the contour of the groove and are thereby brought into contact with one another in the same manner as in the first embodiment. In this second embodiment, however, the pulley is resiliently biased by a spring 34 toward the edge of the board 26.

## Claims

1. A method of sealing an edge of an extruded plastics board (26), the board consisting of opposed spaced apart parallel sheets (11,12), and the method comprising heating the said edge to soften the end portions of the opposed sheets terminating at the edge, and characterised by relatively moving the board and a forming device (17, 30) in a direction parallel to the said edge such that the forming device progressively curves the heated end portions of the sheets inwardly toward one another to form a seal along the said edge.

2. A method according to claim 1 wherein the forming device is rotable about an axis perpendicular to the said edge.

3. A method according to claim 2 wherein the board is fixed and the forming device is rolled along the said edge.

4. A method according to claim 2 wherein the position of the forming device is fixed and the edge of the board is advanced through the forming device, the device being rotated at speed corresponding to the speed at which the board is advanced through the device.

5. A method according to any one of the preceding claims wherein the forming device comprises a grooved wheel or pulley.

6. A method according to any one of the preceding claims in which the forming device includes means (15, 16; 28, 29) for initially deflecting the heated end portions inwardly toward one another, and means (17, 30) located downstream of the deflecting means for additionally curving the inwardly turned heated portions into contact with one another to form the said seal.

7. A method according to claim 6 in which the deflecting means comprises a pair of opposed freely rotatable rollers.

8. A method according to claim 7 in which the rollers (15, 16) are oppositely inclined to one another on opposite sides of the board.

9. A method according to claim 7 in which the rollers (28, 29) are arranged vertically one above the other, the upper roller engaging the upper surface of the board and the lower roller engaging the underside of the board, the opposed faces (32, 33) of the rollers being profiled such that, as the heated edge of the board passes through the gap between the rollers, the profiled faces curve the end portions of the sheets inwardly toward one another.

10. Apparatus for sealing an edge of an extruded plastics board (26), the board consisting of opposed spaced apart parallel sheets (11, 12), and the apparatus comprising means (14, 20) for heating the said edge to soften the end portions of the opposed sheets terminating at the edge, and means for relatively moving the board and a forming device (17, 30) in a direction parallel to the said edge such that the forming device progressively curves the heated end portions inwardly toward one another to form a seal along the said edge.

11. Apparatus according to claim 10 wherein the forming device is rotatable about an axis perpendicular to the said edge.

12. Apparatus according to claim 11 wherein the forming device comprises a grooved wheel or pulley.

13. Apparatus according to any one of the claims 10-12 in which the forming device includes deflecting means (15, 16; 28, 29) for initially deflecting the heated end portions inwardly toward one another, and means (17, 30) located downstream of the deflecting means for additionally curving the inwardly turned heated portions into contact with one another to form the said seal.

14. Apparatus according to claim 13 in which the deflecting means comprises a pair of opposed freely rotatable rollers, a first of the rollers (15, 28) engaging one side of the board, and the second roller (16, 29) engaging the opposite side of the board.

15. Apparatus according to claim 14 wherein the rollers (28, 29) are vertically arranged one above the other, the opposed faces (32, 33) of the rollers being profiled such that, as the heated edge of the board passes through the gap between the rollers, the profiled faces curve the end portions of the sheets inwardly toward one another.

16. Apparatus according to any one of the claims 10-15 wherein the heating means (20) comprises an infra-red heater (21, 22) located within a housing (23), the housing being shaped to direct radiation from the heater to an opening (25) in the housing through which the board is passed.

17. Apparatus according to claim 16 further comprising means (27) for extracting heated air from the housing when heating the said edge of the board.
